# DEMANDE DE BREVET EUROPEEN

(11) **EP 1 481 860 A1**
(43) Date de publication de la demande: **01.12.2004**
(21) Numéro de dépôt: 04291111.5
(22) Date de dépôt: 30.04.2004
(51) Int. Cl.: B60T 7/06, G05G 1/14

(54) **Système de recul pour une pédale de véhicule automobile**

(30) Priorité: 26.05.2003 FR 0306307
(71) Demandeur: Peugeot Citroen Automobiles SA, 78140 Vélizy Villacoublay (FR)
(72) Inventeur: Humbert, Jean-Michel, 93330 Neuilly sur Marne (FR); Chan-Ng-Yok, Laurent, 92800 Puteaux (FR); Andrizzi, Silvio, 2582 HW Den Haag (NL)
(74) Mandataire: Fernandez, Francis Lionel

(57) **Abrégé**

L'invention se rapporte à un système de recul 1 pour une pédale de véhicule automobile comprenant une pédale 2, des moyens de transmission 7 de l'effort appliqué sur ladite pédale, des moyens d'encadrement 4 comportant au moins deux plaques 9 sensiblement parallèles et permettant à ladite pédale d'être montée sur pivot 8. Selon l'invention, il comporte de plus un dispositif d'écartement desdits moyens d'encadrement non solidaire desdites au moins deux plaques permettant au pivot 8 de se désengager desdits moyens d'encadrement en cas de choc dudit véhicule automobile.

L'invention trouve son application notamment dans le domaine des crash tests.

## Description

L'invention se rapporte à un système de recul pour une pédale de véhicule automobile et notamment pour une pédale de frein.

Les constructeurs automobiles s'attachent à constamment améliorer la sécurité de leurs véhicules. Concernant la sécurité dans l'habitacle, des coussins gonflables ou des pédaliers déformables sont notamment apparus. Toutes ces améliorations sont généralement édictées et régulièrement réévaluées par des réglementations toujours plus sévères.

Ainsi, des améliorations sont à apporter notamment dans le domaine des pédaliers. En effet, une collision du véhicule à haute vitesse peut être si forte qu'elle peut occasionner une déformation de la structure du véhicule au point de pousser l'ensemble du pédalier vers le conducteur.

Plus particulièrement pour les pédales de frein, il est commun d'utiliser une tige pour relier la pédale de frein à un amplificateur de freinage. La tige se translate d'un faible débattement dans l'amplificateur de freinage qui va transformer et envoyer la commande de freiner jusqu'aux freins.

Malheureusement, dans le cas où le conducteur serait en train de freiner lors d'une collision, il peut être gravement blessé si le pédalier est poussé vers lui. En effet, le faible débattement de ladite tige ne va pas être à même de compenser le déplacement du pédalier.

Le but de la présente invention est de pallier tout ou partie les inconvénients cités précédemment en proposant un système de recul de constitution simple pour une pédale de véhicule automobile qui évite lors d'une collision les lésions des membres inférieurs dues à l'avancée du tablier.

A cet effet, l'invention se rapporte à un système de recul pour une pédale de véhicule automobile comprenant une pédale, des moyens de transmission de l'effort appliqué sur ladite pédale, des moyens d'encadrement comportant au moins deux plaques sensiblement parallèles et permettant à ladite pédale d'être montée sur pivot caractérisé en ce qu'il comporte de plus un dispositif d'écartement desdits moyens d'encadrement non solidaire desdites au moins deux plaques permettant au pivot de se désengager desdits moyens d'encadrement en cas de choc dudit véhicule automobile. La pédale n'est alors tenue que par les moyens de transmission grâce à la libération de son axe de rotation ce qui évite les lésions des membres inférieurs du conducteur dudit véhicule.

Selon l'invention, ledit dispositif d'écartement comporte, avantageusement, des moyens d'actionnement qui, solidaires dudit pivot, encadrent partiellement ladite pédale et des moyens de guidage pour permettre de désengager, suivant la violence dudit choc, le pivot. Cela permet un désengagement du pivot lié à une avancée prédéterminée du pédalier dans l'habitacle.

De manière avantageuse selon l'invention, lesdits moyens d'actionnement comportent une pièce sensiblement en forme d'un quart de disque comportant un trou transversal apte à servir de logement audit pivot et un évidement longitudinal apte à laisser un espace intérieur traversé par une partie dudit pivot sur laquelle est montée ladite pédale permettant à la pièce, lorsque le choc dudit véhicule pousse le pédalier vers ledit habitacle, d'imprimer un mouvement de rotation induit par la rencontre avec un autre système fonctionnel dudit véhicule. Ledit autre système fonctionnel comporte préférentiellement le support de colonne de direction dudit véhicule.

Les moyens d'actionnement comportent, avantageusement selon l'invention, de plus deux cames sensiblement annulaires situées respectivement contre chaque face principale de ladite pièce et sensiblement autour dudit trou pour permettre à chaque came, lors de ladite rotation de la pièce, d'interagir avec une rampe associée, chacune située sur une desdites au moins deux plaques parallèles, pour écarter ces dernières.

Préférentiellement selon l'invention, les moyens de guidage comportent deux doigts solidaires des moyens d'encadrement s'étendant sensiblement horizontalement sur sensiblement le même plan horizontal que ledit pivot pour éviter une rotation asymétrique desdits moyens d'actionnement.

D'autres particularités et avantages ressortiront clairement de la description qui en est faite ci-après, à titre indicatif et nullement limitatif, en référence aux dessins annexés, dans lesquelles :
- la figure 1 est une vue de droite du système de recul dans son état non actionné ;
- la figure 2 est une vue de derrière de l'ensemble came - rampe selon l'invention ;
- la figure 3 est une vue de droite du système de recul dans son état actionné.

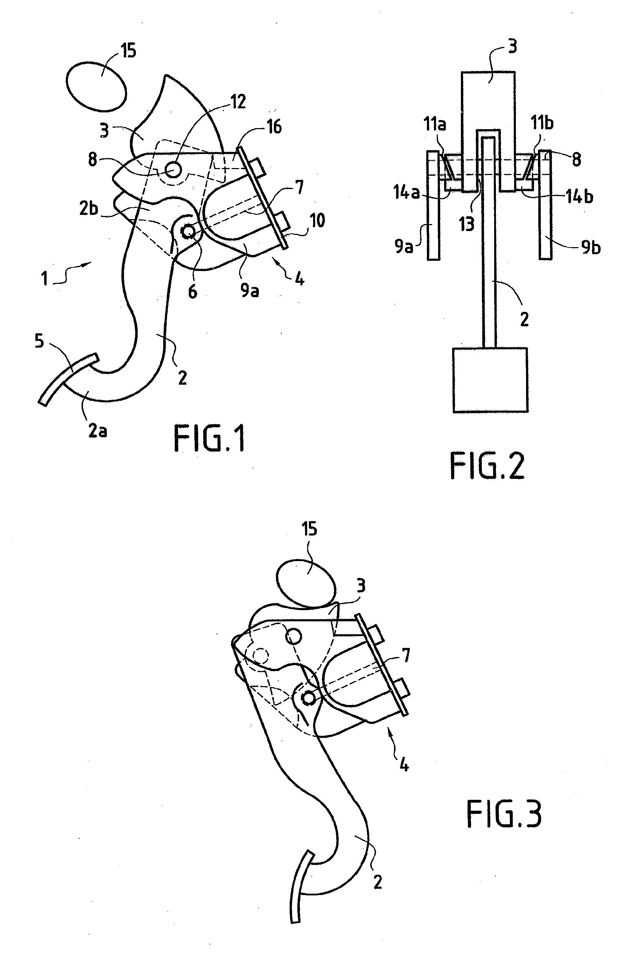

Dans l'exemple illustré à la figure 1, on peut voir que le système de recul 1 comporte principalement une pédale 2, une pièce 3 sensiblement en forme de quart de disque et des moyens d'encadrement 4.

La pédale 2 est de forme incurvée et comporte à une de ses extrémités 2a, un patin 5 apte à être utilisé par le conducteur pour pousser la pédale 2. A sa deuxième extrémité 2b, la pédale 2 comporte un trou 6 permettant de solidariser ladite pédale avec une tige 7 reliée préférentiellement à un système de freinage (non représenté).

Aux exemples illustrés aux figures 1 et 2, on peut voir que la pédale 2 est montée sur un pivot 8 entre deux plaques parallèles 9 que comportent les moyens d'encadrement 4 au moyen de trous 12'. Ces moyens d'encadrement peuvent comporter en plus une troisième plaque 10 permettant de rigidifier le pédalier. les moyens d'encadrement 4 sont fixés préférentiellement contre le tablier (non représenté) du véhicule automobile. Dans l'exemple de la figure 2, on peut voir que chaque plaque 9a et 9b supporte une rampe respectivement 11 a et 11 b.

Dans les exemples illustrés aux figures 1 et 2, on peut voir la pièce 3 sensiblement en forme de quart de disque. Elle comporte à sa base un trou transversal 12 qui, en vis-à-vis des trous 12' réalisés dans les plaques parallèles 9, est apte à accueillir le pivot 8 sensiblement de forme cylindrique.

La pièce 3 comporte également un évidement longitudinal 13. Comme illustré dans l'exemple de la figure 2, on peut voir que cet évidement coupe le trou 12. En effet à cette figure, une partie du pivot 8 entre et sort des flancs de la pièce 3 et traverse l'espace évidé 13 de cette dernière. Cette partie du pivot 8 est utilisée pour y monter la pédale 2 qui peut ainsi tourner par rapport à lui.

Autour de chaque extrémité du trou 12 réalisé dans la pièce 3, on peut voir une came respectivement 14a et 14b. Elles font vis-à-vis avec les rampes 11.

Lors d'un fonctionnement normal, c'est-à-dire en dehors d'un accident occasionnant une déformation du tablier sur lequel le système de recul 1 est monté, le conducteur appuie sur le patin 5 pour commander préférentiellement le système de freinage. Cette poussée fait tourner la pédale 2 autour du pivot 8 et induit un mouvement de translation de la tige 7 qui permettant ainsi de commander ledit système de freinage.

Lors d'un choc frontal violent, le système de recul 1 est poussé vers préférentiellement le support de colonne de direction 15. Le système de recul 1 est donc déclenché en fonction de la distance qui le sépare dudit support de colonne de direction.

Le système de recul 1 entre en contact avec le support 15 par le haut de la pièce 3. Au fur et à mesure que le système de recul 1 est poussé vers le support 15, la pièce 3 imprime un mouvement de rotation initié par la butée contre le support 15. Cette rotation oblige les cames 14a et 14b à entrer en contact avec respectivement les rampes 11 a et 11b contenues sur respectivement les plaques 9a et 9b.

L'effort, exercé par le rapprochement entre le système de recul 1 et le support 15, étant plus grand que celui à fournir pour continuer à faire tourner les cames 14a et 14b contre les rampes 11, que ladite rotation est favorisée. Elle oblige donc les plaques 9a et 9b à se déformer sensiblement autour de ses trous 12' par le mouvement de poussée hélicoïdal de chaque came 14 contre sa rampe associée 11. Tant et si bien que quand la rotation a dépassé un angle prédéfini, le pivot 8 est libéré des trous 12'. Préférentiellement selon l'invention, il est libéré pour une rotation de la pièce 3 inférieure à 90 degrés.

Comme dans l'exemple illustré à la figure 3, la pédale 2 est alors uniquement tenue par sa tige 7 et les mouvements de la pièce 3 sont totalement tributaires des mouvements de la pédale 2. Les lésions du membre inférieur, dues à la remontée de la pédale 2 en cas de choc, sont ainsi minimisées.

Enfin, pour éviter une rotation asymétrique de la pièce 3, il peut être ajouté des doigts 16 solidaires des moyens d'encadrement 4 pour guider la pièce 3 à partir de chacune de ses surfaces principales et ainsi rendre plus précis le mécanisme du système de recul 1 de la pédale 2.

Bien entendu, la présente invention ne se limite pas à l'exemple illustré mais est susceptible de diverses variantes et modifications qui apparaîtront à l'homme de l'art. En particulier, la pièce 3 peut être de configuration différente.

## Revendications

1. Système de recul (1) pour une pédale de véhicule automobile comprenant une pédale (2), des moyens de transmission (7) de l'effort appliqué sur ladite pédale, des moyens d'encadrement (4) comportant au moins deux plaques (9) sensiblement parallèles et permettant à ladite pédale d'être montée sur pivot (8) **caractérisé en ce qu'**il comporte de plus un dispositif d'écartement desdits moyens d'encadrement non solidaire desdites au moins deux plaques permettant au pivot (8) de se désengager desdits moyens d'encadrement en cas de choc dudit véhicule automobile.

2. Système de recul (1) selon la revendication 1, **caractérisé en ce que** ledit dispositif d'écartement comporte des moyens d'actionnement qui, solidaires dudit pivot, encadrent partiellement ladite pédale et des moyens de guidage pour permettre de désengager, suivant la violence dudit choc, le pivot.

3. Système de recul (1) selon la revendication 2, **caractérisé en ce que** lesdits moyens d'actionnement comportent une pièce (3) sensiblement en forme d'un quart de disque comportant un trou transversal (12) apte à servir de logement audit pivot et un évidement longitudinal (13) apte à laisser un espace intérieur traversé par une partie dudit pivot sur laquelle est montée ladite pédale permettant à la pièce (3), lorsque le choc dudit véhicule pousse la pédale (2) vers ledit habitacle, d'imprimer un mouvement de rotation induit par la rencontre avec un autre système fonctionnel dudit véhicule.

4. Système de recul (1) selon la revendication 3, **caractérisé en ce que** les moyens d'actionnement comportent de plus deux cames (14) sensiblement annulaires situées respectivement contre chaque face principale de ladite pièce et sensiblement autour dudit trou pour permettre à chaque came (14), lors de ladite rotation de la pièce (3), d'interagir avec une rampe (11) associée, chacune située sur une desdites au moins deux plaques parallèles, pour écarter ces dernières.

5. Système de recul (1) selon l'une des revendications 2 à 4, **caractérisé en ce que** les moyens de guidage comportent deux doigts (16) solidaires des moyens d'encadrement (4) s'étendant sensiblement horizontalement sur sensiblement le même plan horizontal que ledit pivot pour éviter une rotation asymétrique desdits moyens d'actionnement.

6. Système de recul selon l'une des revendications 3 à 5, **caractérisé en ce que** ledit autre système fonctionnel comporte le support (15) de colonne de direction dudit véhicule.
